Europäisches Patentamt

European Patent Office

Office européen des brevets

(11) Publication number: **0 372 461**
**A1**

## (12) EUROPEAN PATENT APPLICATION

(21) Application number: **89122357.0**

(22) Date of filing: **05.12.89**

(51) Int. Cl.5: **G08C 23/00, H04B 5/00**

(30) Priority: **06.12.88 IT 2289788**

(43) Date of publication of application:
**13.06.90 Bulletin 90/24**

(84) Designated Contracting States:
**BE CH DE ES FR GB IT LI NL**

(71) Applicant: **FABBRICHE RIUNITE MISURATORI SACOFGAS S.p.A**
**Via A. Sforza, 85**
**I-20141 Milan(IT)**

(72) Inventor: **Ponzio, Vittorio**
**Via Tortona, 74**
**I-20144 Milan(IT)**
Inventor: **Vizzotto, Raffaello**
**Via Brasilia, 3**
**I-Casal Serugo (Padova)(IT)**

(74) Representative: **Dr. Ing. A. Racheli & C.**
**Viale San Michele del Carso, 4**
**I-20144 Milano(IT)**

(54) **Improved process and apparatus for transmitting measurements through a metal pipe.**

(57) Provision is made for the generation of interrogation signals in a central supply zone, by means of an electronic apparatus (20$'$), and for transmitting the said signals to one or more users (U1$'$, U2', ... UN$'$), by directly connecting the said electronic apparatus (20$'$) to a metal pipe (10$'$); for receiving the said signals by means of the direct connection to the metal pipe (10$'$) of one or more receiving coils (R1$'$, R2$'$, ... RN$'$), each positioned in the respective user and, preferably, resonant at the frequency of the signals to be received; for recognizing the signal and for generating a response signal, if any, by means of another electronic apparatus (21$'$), which provides for the transmission of the said signal to the central supply zone, by means of direct connection to the metal pipe (10$'$). The signal is received by a receiving coil (R$'$), preferably resonant at the frequency of the signals to be received, this too being connected directly to the metal pipe (10$'$).

FIG. 2

signal processing
CENTRAL SUPPLY ZONE

# IMPROVED PROCESS AND APPARATUS FOR TRANSMITTING MEASUREMENTS THROUGH A METAL PIPE

The present invention concerns an apparatus suitable for realizing the transmission of signals through pipelines made of ferromagnetic material already existing in a supply network, for example a gas network.

An apparatus of the type here described, together with the relative process, is already known, in the European patent application No. 89114226.7, in the name of the same applicant. The said apparatus generates trains of coded pulses and transmits such signals by means of two or more pairs of transmitting/receiving coils, each coil being positioned around a portion of the main pipe or its branches; one pair is positioned in a central supply zone, and the other pairs are positioned in each user. In addition, in each user a gauge circuit is foreseen to which the receiving coil is connected, as well as the reader of a measuring apparatus, connected to the transmitting coil.

The apparatus described completely fulfils the proposed aim, permitting the reading of one or more measuring apparatuses without the use of supplementary electric conductors, but it has a drawback in that it is necessary to disassemble the piping, or at least a length of it, to allow the transmitting/receiving coils to be mounted around it.

Another drawback occurs in the case when a large number of users is to be connected, for which it is necessary to determine a large number of codes, each to be assigned to a single user; the train of impulses which represents the n-th code can therefore be of considerable length, which causes an increase in the transmission and reception times.

GB-A-851 917 discloses a system in particular for underground telephonic conversations wherein, in one of the embodiments, an existing metal pipe is used for carrying out a merely magnetic coupling between the transmitting apparatus and the pipe.

US-A-3 313 160 discloses a system for transmitting measurements through a pipe wherein signals are used in the range of sonic frequences and are transmitted through a fluid contained in the pipe. Besides, the use of sound frequences gives rise to noise both in the transmitter and in the receiver area.

DE-A-2 829 302 discloses a system for transmitting signals inside of a building wherein the existing pipe network of the building itself is used, in particular for creating al alarm system. Signals are in the range of the sound frequences and are driven into the pipe by means of a transformer which forms, together with the pipe, a closed ferromagnetic circuit.

The aim of the present invention is therefore to provide a system for transmitting measurements through a metal pipe, which represents an improvement on the apparatus and the process described in the above-quoted European patent application, which can be applied more easily to a pre-existing piping system, and which does not involve disassembling and reassembling the pipes.

An additional aim is the possibility of using a method of recognizing the individual users which reduces transmission and reception times.

The above aims have been achieved by foreseeing the generation of interrogation signals by means of an appropriate electronic apparatus, positioned in a central supply zone; the transmission of the said signals by means of direct connection of the said apparatus to the metal pipe, to one or more receiving coils, each one located in the respective user and connected directly to the metal pipe; the recognition of the said signals and the generation of response signals, if any, by means of another electronic apparatus. The said signals are therefore transmitted, by direct connection to the metal pipe, to a receiving coil located in the central supply zone, which is also connected to the metal pipe.

The apparatus according to the present invention comprises an electronic apparatus for generating interrogation signals and a receiving coil, positioned in a central supply zone; both are connected directly to the metal pipe; one or more receiving coils and one or more electronic apparatuses for recognizing the signal received and generating the response signal, the said receiving coils and the said electronic apparatuses being directly connected to the metal pipe and each located in the relative user. The receiving coils are preferably paralleled to a relative capacitor, so as to realize R-C resonant circuits.

According to a first preferred embodiment, the circuits set up in each user are self-powered by means of a rectifying bridge and a battery or an accumulator.

According to another preferred embodiment, the circuits set up in each user are self-powered by means of the discharge of a condenser, charged by means of diodes, which rectify the current which flows through the user's receiving circuit and is transmitted by means of the metal pipe.

Preferably the interrogation signal transmitted from the central supply zone has a frequency higher than 20 KHz, with a preferred value of about 80 KHz and is modulated both in frequency and in pulse trains.

The invention will now be better described with the aid of the enclosed drawings, in which:

Fig. 1 shows an overall view of a first embodiment of the apparatus according to the present invention;

Fig. 2 shows an overall view of a preferred embodiment of the apparatus;

Fig. 3 shows an improvement of the circuit set up in each user;

Fig. 4 represents a further improvement of the circuit set up in each user.

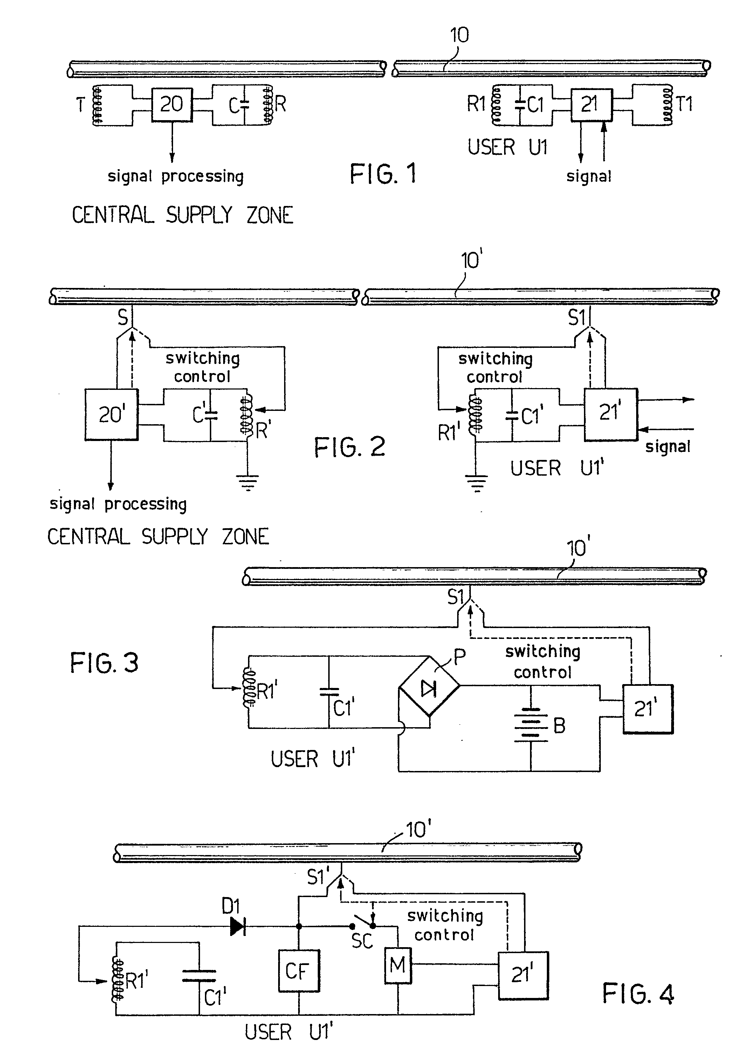

With reference to fig. 1, 10 indicates the metal pipe used for the transmission of the signals. In the figure, the tube 10 is shown as a single rectilinear length, but it is obvious that it can be of any shape and can include possible branches.

In correspondence with the central supply zone, a first pair of coils, the transmitting coil T and the receiving coil R respectively, is connected to the pipe 10. Both the coils are positioned with their axes inclined with respect to that of the pipe 10 and are positioned facing its external surface. The inclination of the axes of the coils with respect to that of the pipe can assume any value between 0 and 90 degrees; preferably the axes of the coils are perpendicular to the axis of the pipe 10. The transmitting coil T is connected to an electronic apparatus 20 for generating an appropriate interrogation signal, which can consist of a succession of pulses forming series of codes. Such a signal can have single frequency or frequency modulation. Alternatively, the signal generated can be modulated both in frequency and in pulse trains. The frequency of said signals is higher than 20 KHz, with a preferred value of about 80 KHz.

Preferably a capacitor C is paralleled to the receiving coil R, so as to realize an R-C resonant circuit. The coil R is also connected to the apparatus 20, which transmits the signals to appropriate processing devices, which are not the object of the present invention. Internally to the apparatus 20 a switching device is also provided, which operates the coil T during the signal transmission phase and the coil R during the reception phase.

A second pair of coils, a transmitting coil T1 and a receiving coil R1 respectively, is connected to the opposite end of the pipe 10, which represents a general user U1, both positioned facing the external surface of the pipe 10 and with their axes inclined with respect to that of the pipe, at any angle between 0 and 90°. Preferably the said axes are perpendicular to the axis of the pipe 10.

The receiving coil R1 is preferably paralleled to a capacitor C1, so as to realize a circuit resonant at the frequency of the signal transmitted by the coil T; across the resonant circuit are connected electronic signal processing apparatuses and, if any, signal recognition apparatuses, indicated with 21, which are not the object of the present invention. Such apparatuses are also connected to the coil T1; they also comprise an appropriate switching device, not illustrated, which operates the coil R1 during the reception phase and the coil T1 during the transmission phase.

Although in figure 1 only one user U1 is shown, it is obvious how any number N of users U1, U2, ... UN can be connected to the pipe 10 or to its branches, each comprising a receiving coil R1, R2, ... RN, with its relative capacitor C1, C2 ... CN, as well as a transmission coil T1, T2 ... TN.

The invention works as follows; the electronic apparatus 20 generates interrogation signals, modulated in trains of coded pulses and/or in frequency, which are transmitted by means of the coil T to the users U1, U2, ... UN. The coils R1, R2 ... RN thus receive the said signals, which are processed by the apparatus 21. In the case of processing involving the production of a response signal by one or more users, this signal is sent, by means of the apparatus 21, to the relative transmitting coil T1, T2, ... TN, which transmits the signal to the central receiving coil R; the signal is then sent to the electronic apparatus 20, and sent from there to appropriate processing devices. These operations can be repeated sequentially or carried out "una tantum".

The figure 2 shows a preferred embodiment of the invention, in which a metal tube 10' is again shown. In the central supply zone, a switch S effects alternately the direct connection to the tube 10' of an electronic interrogation signal generating apparatus 20', analogous to the apparatus 20 in figure 1, during the transmission phase, and of a receiving coil R1, during the reception phase. Preferably the coil R' is paralleled to a capacitor C', so that a resonant circuit is obtained, which is, in its turn, connected to the apparatus 20'. The commutation of the switch S is controlled by the apparatus 20', in such a way as to connect the apparatus itself to the pipe 10' during the signal transmission phase, and the coil R' during the reception phase. It is possible to set up the circuit without using the switch S, that is leaving the apparatus 20' and the coil R' always connected to the pipe 10', in the case where the signal transmitted and the received one are of different frequencies.

An apparatus 21', analogous to the apparatus 21 in figure 1, and a receiving coil R1' are connected directly by means of a switch S1 to the opposite end of pipe 10', which represents a general user U1'. Preferably the coil R1' is paralleled to a capacitor C1', so as to form a resonant circuit, and then is connected to the apparatus 21', for processing the signal received and for the production and direct transmission of the response signal, if any. The apparatus 21′ also controls the commutation of the switch S1, by connecting the coil R′ to the pipe 10′ during the reception phase, and by being connected directly during the signal transmission phase. It is possible to set up the circuit of each user without using the switch S1, that is by realizing the direct connection of the coil R1′ and of the apparatus 21′ to the pipe 10′, in the case where the frequencies of the interrogation signal and of the transmitted signal are different.

In this case also, although only one user U1′ is represented, it is obvious how the system can comprise any number of users U1′, U2′, ... UN′, analogous to the U1′ described.

The working of the apparatus is identical with that of the embodiment shown in figure 1; the only difference lies in the fact that, in this case, it is the pipe itself 10′ which makes up an integral part of the electromagnetic circuit; this enables signal transmission to take place by means of the direct electric connection of the signal generating apparatuses to the pipe, instead of through the transmitting coils. As shown in figure 2, the circuit is completed by virtual groundings, in correspondence with the central supply zone and with each user.

In figure 3 an improvement of the circuit of each user is shown, which can be applied to both the above mentioned embodiments. For the sake of simplicity, this improvement has been represented in its application to the preferred embodiment described in figure 2; it is obvious how it can be applied also to the other embodiment described. The components carrying out the same function already described in figure 2 have been identified in the same way.

It will be noted that to the branch of the circuit connecting the switch S1 to the receiving coil R1′ a rectifying device is connected, represented with a diode bridge P, across which a battery is connected (the battery can be replaced by an accumulator). The remaining part of the circuit is identical with that shown in figure 2. The battery B is charged by means of the direct voltage drawn across the bridge P and transmitted by the circuit set up in the central supply zone. This realization obviates the necessity of providing any external feeding means for the circuit installed in each user.

In figure 4 a further improvement of each user circuit is shown, this too capable of being applied to both the embodiments previously described and being illustrated with reference to the preferred embodiment described in figure 2. In this case also, the components carrying out the same function already described in relation to figure 2 have been identified in the same way.

It will be noted that the connection of the receiving coil R1′ to the pipe 10′ is made by means of a diode D1. To the branch connecting the witch S1 with the coil R1′ a further circuit branch is connected, comprising a capacitor CF, called "flash" capacitor. This circuit comprising the capacitor CF is connected to a multiplier circuit M (or several multiplier circuits), which, in turn, is connected to the electronic apparatus 21′. The condensor CF is charged by the current which flows in the user receiving circuit and is transmitted through the pipe 10′. At the moment when the user U1 must transmit data, the apparatus 21′ actuates the closure of the switch SC and the consequent "flash" discharge of the capacitor CF feeds the transmission apparatus 21′. The discharge of the capacitor CF lasts long enough to feed the apparatus 21′ in course of transmitting the response signal.

In this way, an apparatus for transmitting measurements through a metal pipe has been produced which avoids the drawbacks quoted above, in that is is simple and quick to apply to a pre-existing pipe, without the need to disassemble lengths of piping; in addition, thanks to the possibility of modulating the transmitted signal both in frequency and in pulse trains, a large number of users can be connected to the central supply zone, cutting down signal transmission times.

## Claims

1. An apparatus for transmitting measurements through a metal pipe (10′), which is an open circuit for the transmission of electromagnetic waves, comprising an electronic apparatus (20′) for generating interrogation signals and a receiving coil (R′), positioned in a central supply zone; one or more receiving coils (R1′, R2′, ... RN′) and one or more electronic apparatuses (21′), for recognizing the received signal and generating the response signal, each of the said receiving coils and the aid electronic apparatuses (21′) being installed in the respective user (U1′, U2′, ... UN′), characterized in that the said electronic apparatus (20′) for generating interrogation signals, the said electronic apparatuses (21′) for recognizing received signals and generating response signals and the said receiving coils (R′; R1′, R2′, ... RN′) are electrically connected directly to the metal pipe (10′) and in that said interrogation and response signals have a frequency preferably higher than 20 HKz.

2. An apparatus according to claim 1, characterized in that it comprises, in the central supply zone, a switch (S) for the electrical direct connection to the metal pipe (10′) of, alternatively, the electronic apparatus (20′) for generating interrogation signals during the signal transmission phase, and of the receiving coil (R′) during the signal reception phase, the switch (S) being controlled by the electronic apparatus (20'), and, in each user (U1', U2', ... UN'), switches (S1, S2, ... SN) for the direct electrical connection to the metal pipe (10'), of, alternatively, the electronic apparatus (21') for recognizing the signal received and generating the response signal during the signal transmission phase, and of the receiving coils (R1', R2', ... RN'), during the signal reception phase, the said switches (S1, S2, ... SN) being controlled by electronic apparatuses (21').

3. An apparatus for transmitting measurements through a metal pipe (10), which is an open circuit for the transmission of electromagnetic waves, comprising an electronic apparatus (20) for generating interrogation signals and a coil (T) for transmitting the said signals, both positoned in a central supply zone; one or more receiving coils (R1, R2, ... RN) and one or more transmission coils (T1, T2, ... TN), each pair of receiving-transmission coils being connected to an electronic apparatus for recognizing the signal received and generating the response signal (21) and being installed in the relative user (U1, U2, ... UN); a receiving coil (R), positioned in the central supply zone; characterized in that the said receiving coils (R; R1, R2, ... RN) and transmitting coils (T; T1, T2, TN) are positioned facing the external surface of the said pipe (10), with their axes inclined with respect to the axis of the same, said interrogation and response signals having a frequency preferably higher than 20 KHz

4. An apparatus according to claim 3, characterized in that the said receiving coils (R; R1, R2, ... RN) and the said transmission coils (T; T1, T2, ... TN) have their axes perpendicular to that of the metal pipe (10).

5. An apparatus according to any one of the previous claims, characterized in that the said receiving coils (R; R1, R2, ... RN; R'; R2', ... RN') are paralleled to a respective capacitor (C; C1, C2, ... CN; C'; C1', C2', ... CN'), so as to realize the same number of resonant circuits.

6. An apparatus according to any one of the previous claims, characterized in that the circuits installed in each user (U1, U2, ... UN; U1', U2', ... UN') do not require external electric supply.

7. An apparatus according to the previous claim, characterized in that the electric power for feeding the circuits set up in each user (U1, U2, ... UN; U1', U2', ... UN') is supplied by a battery (B), kept charged by means of a rectifying device, which uses the sinusoidal current transmitted from the central supply zone through the metal pipe (10; 10').

8. An apparatus according to claim 6, characterized in that the electric power for feeding the circuits set up in each user (U1, U2, ... UN; U1',

U2', ... UN') is supplied by the discharge of a capacitor (CF) , charged from the central supply zone through the metal tube (10; 10'); the said discharge taking place at the closing of a switch (SC), controlled by the electronic apparatus (21; 21').

9. An apparatus according to any one of the previous claims, characterized in that the interrogation signal produced by the electronic apparatus (20; 20') consists of a train of pulses.

10. An apparatus according to any one of the claims from 1 to 8, characterized in that the interrogation signal produced by the electronic apparatus (20; 20') is modulated in pulse trains which are, in turn, modulated in frequency.

11. An apparatus according to any one of the claims from 1 to 8, characterized in that the interrogation signal produced by the electronic apparatus (20; 20') is modulated in frequency.

12. A process for transmitting measurements through a metal pipe (10'), which is an open circuit for the transmission of electromagnetic waves, providing for the generation of interrogation signals by means of an electronic apparatus (20') positioned in a central supply zone; the reception of the interrogation signal by means of one or more receiving coils (R1', R2', ... RN'), the recognition of the said signal and the possible production of a response signal by an electronic apparatus (21'), each receiving coil (R1', R2', ... RN') and the electronic apparatus (21') being both located in the corresponding user (U1', U2', ... UN'), whence the transmission of the said signal to the central supply zone and its reception by a receiving coil (R'); characterized in that the transmission of the said interrogation signals and the said response signals takes place by means of the direct electric connection of the electronic apparatus (20') for generating interrogation signals and of the electronic apparatus (21') for recognizing the received signals and generating the response signals to the metal pipe (10'), while the reception of the said signals takes place by means of the direct electrical connection of the receiving coils (R'; R1', R2', ... RN') to the metal pipe (10'), said interrogation and response signals having a frequency preferably higher than 20 KHz.

13. A process according to the previous claim 12, characterized in that the direct electrical connection of the electronic apparatus (20) for generating the interrogation signals and of the receiving coil (R'), positioned in the central supply zone, to the metal pipe (10'), takes place alternately, the connection of the electronic apparatus (20') occurring during the signal transmission phase and the connection of the receiving coil (R') during the signal reception phase respectively, by means of the switch (S'), controlled by the electronic apparatus (20'), and that the direct electrical connection of the electronic apparatus (21') for recognizing and generating the response signal, and of the receiving coils (R1', R2', ... RN'), located in each user (U1', U2', ... UN') to the metal pipe (10') takes place alternately, the connection of the electronic apparatus (21') occurring during the signal transmission phase and that of the receiving coils (R1', R2', ... RN') during the signal reception phase respectively, by means of the switches (S1', S2', ... SN'), controlled by the electronic apparatus (21').

14. A process for transmitting measurements through a metal pipe (10), which is an open circuit for the transmission of electromagnetic waves, providing for the generation of interrogation signals by means of an electronic apparatus (20) for generating interrogation signals and transmitting them by means of a transmitting coil (T), both positioned in a central supply zone; the reception of the interrogation signal by means of one or more receiving coils (R1, R2, ... RN); the recognition of the said signal and the possible production of a response signal by an electronic apparatus (21); the transmission of the said signal by means of a transmitting coil (T1, T2, ... TN), each receiving coil (R1, R2, ... RN), each transmitting coil (T1, T2, ... TN) and the electronic apparatus (21) for recognizing the signal received and generating the response signal being located in the corresponding user (U1, U2, ... UN); the reception of the transmitted signal by means of a receiving coil (R), located in the central supply zone; characterized in that the transmitting coils (T; T1, T2, ... TN) and the receiving coils (R; R1, R2, ... RN) are facing said pipe (10) and the magnetic field which they produce has its axis inclined with respect to the axis of the metal pipe (10), said interrogation and response signals having a frequency preferably higher than 20 KHz.

15. A process according to the previous claim 14, characterized in that the magnetic field produced by the transmission coils (T; T1, T2, ... TN) and received by the receiving coils (R; R1, R2, ... RN) has its axis perpendicular with respect to the axis of the metal pipe.

FIG. 1

CENTRAL SUPPLY ZONE

FIG. 2

CENTRAL SUPPLY ZONE

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | GB-A- 851 917 (HOUILLERES DU BASSIN DU NORD ET DU PAS DE CALAIS) * Page 2, lines 36-49; claim 1; figures 1,5 * | 1,2,5-13 | G 08 C 23/00 H 04 B 5/00 |
| A,D | | 3,14 | |
| Y,D | US-A-3 313 160 (GOLDMAN) * Column 3, line 49 - column 6, line 41; claim 1; figures 1,3,4 * | 1,2,9-13 | |
| Y,D | DE-A-2 829 302 (KRAUSE) * Whole document * | 5-8 | |
| A | DE-A-3 019 124 (DEUTSCHE ITT INDUSTRIES) * Whole document * | 1,3,12,14 | |

|  | TECHNICAL FIELDS SEARCHED (Int. Cl.5) |
|---|---|
|  | G 08 C H 04 B |

The present search report has been drawn up for all claims

| Place of search | Date of completion of the search | Examiner |
|---|---|---|
| THE HAGUE | 24-01-1990 | WANZEELE R.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................
& : member of the same patent family, corresponding
    document

EPO FORM 1503 03.82 (P0401)